(19) Europäisches Patentamt
European Patent Office
Office européen des brevets

(11) **EP 4 783 343 A1**

(12) **EUROPEAN PATENT APPLICATION**

(43) Date of publication:
**29.07.2026 Bulletin 2026/31**

(21) Application number: **26153326.9**

(22) Date of filing: **21.01.2026**

(51) International Patent Classification (IPC):
*H01M 50/417* (2021.01)   *H01M 50/42* (2021.01)
*H01M 50/431* (2021.01)   *H01M 50/443* (2021.01)
*H01M 50/446* (2021.01)   *H01M 50/451* (2021.01)
*H01M 50/489* (2021.01)

(52) Cooperative Patent Classification (CPC):
H01M 50/446; H01M 50/417; H01M 50/42;
H01M 50/431; H01M 50/443; H01M 50/451;
H01M 50/489

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.01.2025 KR 20250009620**

(71) Applicant: **SK On Co., Ltd.**
**Seoul 03161 (KR)**

(72) Inventors:
• **JO, Yun Kyung**
  **34124 Daejeon (KR)**
• **KIM, Hye Min**
  **34124 Daejeon (KR)**
• **KIM, Whee Sung**
  **34124 Daejeon (KR)**

(74) Representative: **Stolmár & Partner**
**Patentanwälte PartG mbB**
**Blumenstraße 17**
**80331 München (DE)**

(54) **SEPARATOR FOR SECONDARY BATTERY, SECONDARY BATTERY INCLUDING THE SAME**

(57)    A separator for a secondary battery according to the present disclosure includes a substrate and a coating layer on a surface of the substrate, the coating layer including inorganic particles. The substrate orientation degree, which is calculated from a puncture strength of the separator and a weight per unit area of the substrate, may be within a predetermined range. A secondary battery according to the present disclosure includes an electrode assembly including a cathode, an anode, and the separator for a secondary battery according to the present disclosure. The thermal stability of the separator and the secondary battery may be improved.

[FIG. 1]

EP 4 783 343 A1

**Description**

BACKGROUND OF THE INVENTION

1. Field

The disclosure of the present application relates to a separator for a secondary battery and a secondary battery including the same. More specifically, the present disclosure relates to a separator for a secondary battery including a substrate and a coating layer, and a secondary battery including the separator.

2. Description of the Related Art

A secondary battery is a battery that can be repeatedly charged and discharged, and with the development of the information communication and display industries, has been widely applied as a power source for portable electronic communication devices, such as camcorders, mobile phones, and laptop PCs. In addition, a battery pack including secondary batteries has recently been developed and applied as power sources for eco-friendly vehicles, such as hybrid automobiles.

A secondary battery may include an electrode assembly including a cathode, an anode, and a separator. Thermal runaway may occur due to damage, defects, external impacts, overcharging, or the like affecting the secondary battery. For example, an internal short circuit may cause excessive current, leading to an increase in internal temperature. Due to an increased internal temperature, active materials included in the cathode and the anode and/or an electrolyte may be decomposed, and thermal runaway may occur due to a chain reaction of high-temperature gases generated during the decomposition process.

SUMMARY

An object of the present disclosure is to provide a separator for a secondary battery having improved stability.

Another object of the present disclosure is to provide a secondary battery having improved stability.

Yet another object of the present disclosure is to provide a secondary battery module having improved stability.

A separator for a secondary battery according to embodiments of the present disclosure includes: a substrate; and a coating layer on a surface of the substrate, the coating layer including inorganic particles. A substrate orientation degree of the separator, as defined by Equation 1 below, is 90 gf/g·m² or higher.

$$[\text{Equation 1}]$$

$$\text{Substrate orientation degree} = S / W$$

In Equation 1, S is a puncture strength of the separator, and W is a weight per unit area of the substrate.

According to exemplary embodiments, the substrate orientation degree may be 90 gf/g·m² to 120 gf/g·m².

According to exemplary embodiments, the content of the inorganic particles may be 40 wt% or more, based on a total weight of the coating layer.

According to exemplary embodiments, the inorganic particles may include at least one of aluminum hydroxide, magnesium hydroxide, aluminum oxide, magnesium oxide, calcium oxide, barium sulfate, boehmite, titanium dioxide, silica, and clay.

According to exemplary embodiments, the weight per unit area of the substrate may be 4.0 g/m² to 5.0 g/m².

According to exemplary embodiments, a machine direction (MD) thermal shrinkage ratio, measured after storage at 130 °C for 1 hour, may be less than 3.0%.

According to exemplary embodiments, a transverse direction (TD) thermal shrinkage ratio, measured after storage at 130 °C for 1 hour, may be less than 2.0%.

According to exemplary embodiments, at least one of a MD stretch ratio and a TD stretch ratio of the substrate may be 3 times to 8 times.

According to exemplary embodiments, the substrate may have a thickness of 1 $\mu$m to 15 $\mu$m.

According to exemplary embodiments, the coating layer may further include polyethylene-based organic particles.

According to exemplary embodiments, the coating layer may further include a binder, and the binder may include at least one of polymethyl methacrylate, polybutylacrylate, polyacrylonitrile, polyvinylpyrrolidone, polyvinylacetate, polyethylene oxide, ethylene vinyl acetate, and a copolymer thereof.

According to exemplary embodiments, the inorganic particles may have a median particle diameter ($D_{50}$) of 0.1 $\mu$m to 5 $\mu$m.

A secondary battery according to embodiments of the present disclosure includes an electrode assembly including a cathode, an anode, and the separator for a secondary battery according to the above-described embodiments interposed between the cathode and the anode.

According to exemplary embodiments, after a self-heating point of the electrode assembly reaches 0.02 °C/min or higher, a temperature at a point where a self-temperature change rate of the electrode assembly reaches 1 °C/sec may be 175 °C or higher.

A secondary battery module according to embodiments of the present disclosure includes a structure in which a plurality of secondary batteries according to the above-described embodiments are stacked on one another.

According to exemplary embodiments, the plurality of secondary batteries may include a first secondary battery and a second secondary battery that is not in contact with the first secondary battery, wherein an ignition propagation time from ignition of the first secondary battery to ignition of the second secondary battery may be 70 seconds or more.

The substrate orientation degree of the separator for a secondary battery according to an embodiment of the present disclosure may be within a predetermined range. Accordingly, the self-heating temperature of a secondary battery including the separator may be increased, and the spread of ignition may be suppressed. Therefore, the thermal stability of the separator and the secondary battery may be improved.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a schematic cross-sectional view illustrating a separator for a secondary battery according to exemplary embodiments;

FIGS. 2 and 3 are a plan view and a cross-sectional view, respectively, illustrating a secondary battery according to exemplary embodiments; and

FIG. 4 is a schematic cross-sectional view illustrating a secondary battery module according to exemplary embodiments.

DETAILED DESCRIPTION

Embodiments of the present disclosure provide a separator for a secondary battery (hereinafter, also abbreviated as a "separator") including a substrate and a coating layer. In addition, the present disclosure provides a secondary battery including the separator and a secondary battery module including the secondary battery.

The terms "first," "second," "upper portion," "upper layer," "lower portion," and "lower layer" as used herein do not designate absolute positions, but are used in a relative sense. For example, such terms are used to distinguish regions with respect to a particular reference surface.

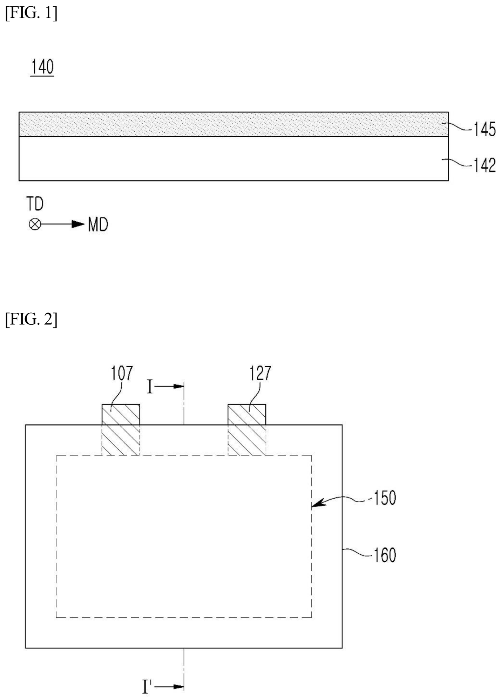

FIG. 1 is a schematic cross-sectional view illustrating a separator for a secondary battery according to exemplary embodiments. The machine direction (MD) shown in FIG. 1 indicates a direction in which a separator manufacturing process proceeds and may correspond to a longitudinal direction of the separator. For example, MD may correspond to a direction in which the substrate is discharged from manufacturing equipment during a substrate manufacturing process. The transverse direction (TD) may be perpendicular to the MD and may be a width direction of the separator.

Referring to FIG. 1, a separator 140 for a secondary battery may include a substrate 142 and a coating layer 145 on a surface of the substrate 142.

The substrate 142 may include a polyolefin-based polymer. For example, the substrate 142 may include a film made of a polyolefin-based polymer (e.g., a porous polyolefin-based film). Accordingly, the stretching direction may be controlled while preventing electrical short circuit between a cathode and an anode through the separator 140.

For example, the polyolefin-based polymer may include polyethylene, polypropylene, polybutylene, polyisobutylene, polypentene, poly-4-methyl-1-pentene, polyhexene, polyheptene, polyoctene, polydecene, a copolymer including one or more thereof, a mixture thereof, or the like.

Examples of polyethylene may include low-density polyethylene (LDPE), linear low-density polyethylene (LLDPE), and high-density polyethylene (HDPE). In an embodiment, high-density polyethylene having a high crystallinity and a high melting point of the resin may be used. Accordingly, the mechanical stability of the substrate may be enhanced while the thermal stability thereof may be increased.

In an embodiment, the substrate 142 may be substantially composed of high-density polyethylene.

The copolymer may include the above-described polyolefin as a part of the polymer, and examples of the copolymer may include ethylene-propylene rubber, an ethylene-octene copolymer, an ethylene-butene copolymer, and ethylene vinyl acetate.

In some embodiments, the substrate 142 may further include a resin such as a polyether, polyacetal, polyamide, polycarbonate, polyimide, polyamideimide, or polyetherimide.

For example, a raw resin of the above-described polyolefin-based resin may be melted and mixed, and thereafter cooled and cut to prepare resin pellets. The resin pellets may be extruded at a temperature of 200 °C or higher using, for example, a T-die extruder to form a preliminary sheet. The preliminary sheet may be cooled to produce an unstretched sheet.

The unstretched sheet may be stretched to form the substrate 142. A stretching method may include single-axis stretching, simultaneous biaxial stretching, sequential biaxial stretching, extrusion stretching, multi-stage stretching, multiple stretching, or the like. Simultaneous biaxial stretching may refer to a stretching method in which MD stretching and TD stretching are performed simultaneously, and the stretching ratios in each direction may be different.

In an embodiment, the substrate 142 may be formed through simultaneous biaxial stretching in terms of the strength of the substrate 142, uniformity of film properties, securing isotropy, and control of an orientation degree described below.

According to exemplary embodiments, a MD stretch ratio may be 3 times to 8 times. According to exemplary embodiments, a TD stretch ratio may be 3 times to 8 times. According to exemplary embodiments, at least one of the MD stretch ratio and the TD stretch ratio of the substrate may be 3 times to 8 times. For example, if at least one of the MD stretch ratio and the TD stretch ratio is less than 3 times, the film arrangement of the substrate 142 may be low, and thus a substrate orientation degree described below may not be within a predetermined range. For example, if at least one of the MD stretch ratio and the TD stretch ratio is more than 8 times, the heat shrinkage properties may be excessively increased.

The MD stretch ratio and the TD stretch ratio may represent stretch ratios relative to the unstretched sheet. The MD (or TD) stretch ratio refers to a stretching ratio applied in the MD (or TD) direction of the sheet, and may be defined as (a length of the sheet after stretching in the MD (or TD) direction)/(a length of the sheet before stretching in the MD (or TD) direction). For example, when the MD stretch ratio of the substrate 142 is 5 times, it may indicate that a length of the sheet in the MD direction is increased by a factor of 5 relative to the unstretched sheet.

In some embodiments, the MD stretch ratio may be 4 times to 8 times, or 5 times to 8 times, or 5.5 times to 7.5 times. In some embodiments, the TD stretch ratio may be 4 times to 8 times, or 5 times to 8 times, or 5.5 times to 7.5 times.

When the MD stretch ratio and TD stretch ratio are adjusted within the above-described range, a substrate orientation degree value described below may be controlled within a predetermined range.

According to exemplary embodiments, the substrate orientation degree of the separator 140, as defined by Equation 1 below, may be 90 gf/g·m$^2$ or higher.

[Equation 1]

$$\text{Substrate orientation degree} = S / W$$

In Equation 1, S is a puncture strength of the separator 140, and W is a weight per unit area of the substrate 142.

The puncture strength may be measured according to a method known in the art. For example, after fixing the separator 140 by using a fixing device, a universal material testing machine may be used to increase a force at a constant rate until the separator 140 is pierced, and a maximum load applied immediately before the separator 140 is pierced may be expressed as the puncture strength of the separator 140.

According to exemplary embodiments, the substrate orientation degree may be 120 gf/g·m$^2$ or less, 118 gf/g·m$^2$ or less, 116 gf/g·m$^2$ or less, 114 gf/g·m$^2$ or less, 112 gf/g·m$^2$ or less, 110 gf/g·m$^2$ or less, 108 gf/g·m$^2$ or less, 107 gf/g·m$^2$ or less, 106 gf/g·m$^2$ or less, or 105 gf/g·m$^2$ or less.

In some embodiments, the substrate orientation degree may be 90.5 gf/g·m$^2$ or higher, 90.8 gf/g·m$^2$ or higher, or 91 gf/g·m$^2$ or higher.

For example, the substrate orientation degree may be 90 gf/g·m$^2$ to 120 gf/g·m$^2$, 90 gf/g·m$^2$ to 116 gf/g·m$^2$, 90 gf/g·m$^2$ to 112 gf/g·m$^2$, 90 gf/g·m$^2$ to 110 gf/g·m$^2$, 90 gf/g·m$^2$ to 108 gf/g·m$^2$, 90 gf/g·m$^2$ to 106 gf/g·m$^2$, or 90 gf/g·m$^2$ to 105 gf/g·m$^2$.

Within the above range, the thermal stability of the secondary battery through the separator 140 may be further improved. For example, if the substrate orientation degree is less than the above range, an ignition temperature may decrease due to an increase in an internal temperature of the secondary battery, and a propagation time to ignition may decrease. For example, if the substrate orientation degree exceeds the above range, mechanical stability may not be secured, thereby causing an increased incidence of internal short circuits in the secondary battery.

According to exemplary embodiments, the weight per unit area of the substrate 142 may be 4.0 g/m$^2$ to 5.0 g/m$^2$. In some embodiments, the weight per unit area of the substrate 142 may be 4.1 g/m$^2$ to 4.9 g/m$^2$, 4.2 g/m$^2$ to 4.8 g/m$^2$, 4.25 g/m$^2$ to 4.75 g/m$^2$, or 4.3 g/m$^2$ to 4.7 g/m$^2$.

Within the above range, the substrate orientation degree may fall within a predetermined range, thereby further improving the thermal stability of the secondary battery.

According to exemplary embodiments, the substrate 142 may have a thickness of 1 $\mu$m to 15 $\mu$m. In some embodiments, the thickness of the substrate 142 may be 2 $\mu$m to 14 $\mu$m, 3 $\mu$m to 13 $\mu$m, 4 $\mu$m to 12 $\mu$m, or 5 $\mu$m to 11 $\mu$m. Within the above range, breakage of the substrate may be suppressed, an energy density may be increased by increasing a substantial active material content of the secondary battery.

The coating layer 145 may be stacked on a surface of the substrate 142. According to exemplary embodiments, the coating layer 145 may be formed on either one of an upper surface and a lower surface of the substrate 142. According to exemplary embodiments, the coating layer 145 may be formed on both surfaces of the substrate 142. When a single-sided coated separator coated on only one surface is used, a decrease in capacity of the secondary battery may be prevented, and when a double-sided coated separator coated on both surfaces is used, the thermal stability of the secondary battery may be further improved.

According to exemplary embodiments, the coating layer 145 may include inorganic particles. For example, the inorganic particles may be ceramic particles.

For example, the inorganic particles may include spinel, cordierite, mullite, kaolinite, silica, talc, forsterite, corundum, alumina, zircon, silicon carbide, boehmite, zirconia, clay, aluminum hydroxide, magnesium hydroxide, aluminum oxide, magnesium oxide, calcium oxide, barium sulfate, titanium dioxide, or the like. These may be used alone or in combination of two or more thereof.

According to exemplary embodiments, the inorganic particles may include one or more of aluminum hydroxide, magnesium hydroxide, aluminum oxide, magnesium oxide, calcium oxide, barium sulfate, boehmite, titanium dioxide, silica, and clay. In an embodiment, the inorganic particles may include boehmite. Accordingly, the self-heating temperature of the secondary battery may be increased, thereby suppressing ignition.

According to exemplary embodiments, the content of the inorganic particles may be 40% by weight ("wt%") or more, 40.5 wt% or more, 41 wt% or more, or 41.5 wt% or more, based on a total weight of the coating layer 145. According to exemplary embodiments, the content of the inorganic particles may be 60 wt% or less, 50 wt% or less, 47 wt% or less, 46 wt% or less, or 45 wt% or less, based on the total weight of the coating layer 145.

For example, the content of the inorganic particles may be 40 wt% to 60 wt%, 40.5 wt% to 50 wt%, 41 wt% to 47 wt%, or 41.5 wt% to 45 wt%, based on the total weight of the coating layer 145. Within this range, a difference in thermal shrinkage ratio between the coating layer and the substrate 142 may be reduced, and ignition of the secondary battery may be further suppressed.

The content of the inorganic particles may represent a value measured by thermogravimetric analysis (TGA) of the separator 140. For example, the content may represent a value measured after heating from room temperature to 900 °C using a thermogravimetric analysis apparatus.

According to exemplary embodiments, the coating layer 145 may include organic particles.

In some embodiments, the organic particles may include polyethylene particles. For example, the polyethylene particles may include a polyolefin-based homopolymer, or a copolymer formed by reacting a polyolefin monomer and a comonomer.

According to exemplary embodiments, the content of the organic particles may be 40 wt% to 60 wt%, 42 wt% to 55 wt%, 44 wt% to 53 wt%, or 45 wt% to 50 wt%, based on the total weight of the coating layer 145.

According to exemplary embodiments, the coating layer 145 may further include a binder. For example, the inorganic particles may be mixed with the binder in a solvent (e.g., water) to prepare a coating slurry. The coating slurry may be coated on a surface of the substrate 142 and then dried to form the coating layer 145.

The binder may improve the stability of the coating layer 145, and non-limiting examples of the binder may include polyalkyl(meth)acrylates such as polymethyl methacrylate, polyethyl acrylate, polybutyl acrylate, and polybutyl methacrylate; polyvinylidene fluoride, polyvinylidene fluoride-hexafluoro propylene, polyvinyl acetate, ethylene vinyl acetate, cellulose acetate, polyacrylonitrile, polyvinyl alcohol, polyvinyl pyrrolidone, polyimide, carboxymethyl cellulose (CMC), polyethylene oxide, and polypropylene oxide. These may be used alone or in combination of two or more thereof.

According to exemplary embodiments, the binder may include one or more of polymethyl methacrylate, polybutylacrylate, polyacrylonitrile, polyvinylpyrrolidone, polyvinylacetate, polyethylene oxide, ethylene vinyl acetate, and a copolymer thereof. Accordingly, the high-temperature stability of the binder may be improved, thereby increasing the ignition delay time through the coating layer 145.

The binder may be included as a remaining amount of the total weight of the coating layer 145. For example, the binder may be included as a remainder excluding the contents of the inorganic particles and the organic particles.

In some embodiments, the inorganic particles may have a median particle diameter ($D_{50}$) of 0.1 $\mu$m to 5 $\mu$m, 0.4 $\mu$m to 3 $\mu$m, or 0.5 $\mu$m to 1.5 $\mu$m. Within this range, a porous structure of the coating layer 145 may be formed through the inorganic particles, and peeling of the coating layer 145 at high temperatures may be prevented.

The "median particle diameter ($D_{50}$)" may refer to a median particle diameter corresponding to 50% of a cumulative distribution on a number basis in which the particles are arranged in order of size.

In exemplary embodiments, the separator 140 may have a total thickness of 5 μm to 30 μm. In some embodiments, the total thickness of the separator 140 may be 10 μm to 20 μm.

According to exemplary embodiments, the coating layer 145 may have a thickness of 1 μm to 10 μm. In some embodiments, the thickness of the coating layer 145 may be 1 μm to 8 μm, or 2 μm to 6 μm.

According to exemplary embodiments, the separator 140 may have an MD thermal shrinkage ratio of less than 3.0%, 2.8% or less, 2.6% or less, 2.5% or less, 2.4% or less, 2.3% or less, 2.2% or less, 2.1% or less, 2.0% or less, or less than 2.0%.

The lower limit of the MD thermal shrinkage ratio of the separator 140 is not limited, but may be, for example, 0.1% or more, 0.2% or more, 0.3% or more, 0.4% or more, or 0.5% or more.

For example, the MD thermal shrinkage ratio of the separator 140 may be 0.1% or more and less than 3.0%, 0.2% to 2.8%, 0.3% to 2.5%, 0.4% to 2.2%, 0.5% to 2.0%, or 0.5% or more and less than 2.0%.

According to exemplary embodiments, the separator 140 may have a TD thermal shrinkage ratio of less than 2.0%, 1.8% or less, 1.6% or less, 1.5% or less, 1.4% or less, 1.3% or less, 1.2% or less, 1.1% or less, or 1.0% or less.

The lower limit of the TD thermal shrinkage ratio of the separator 140 is not limited, but may be, for example, 0.01% or more, 0.05% or more, 0.1% or more, 0.2% or more, or 0.25% or more.

For example, the TD thermal shrinkage ratio of the separator 140 may be 0.01% or more and less than 2.0%, 0.05% to 1.8%, 0.1% to 1.5%, 0.1% to 1.3%, 0.2% to 1.1%, or 0.25% to less than 1.0%.

Within the above range, the self-heating temperature of the separator 140 may be increased, thereby achieving thermal shrinkage prevention properties. In addition, deformation of the separator due to a difference in thermal shrinkage ratio may be suppressed, thereby ensuring thermal stability.

According to exemplary embodiments, a ratio of the MD thermal shrinkage ratio to the TD thermal shrinkage ratio of the separator 140 may be 0.5 to 2.5, 0.75 to 2.25, 0.9 to 2.1, or 1.0 to 2.0. Within this range, deformation and separation of the substrate 142 and the coating layer 145 due to heat may be suppressed.

The term "thermal shrinkage ratio" as used herein refers to a ratio of a reduced length to an initial length after storage in a 130 °C chamber for 1 hour. For example, the MD (or TD) thermal shrinkage ratio may represent a ratio of a reduced length in the MD (or TD) direction of the separator 140 to an initial length in the MD (or TD) direction after storage in a 130 °C chamber for 1 hour.

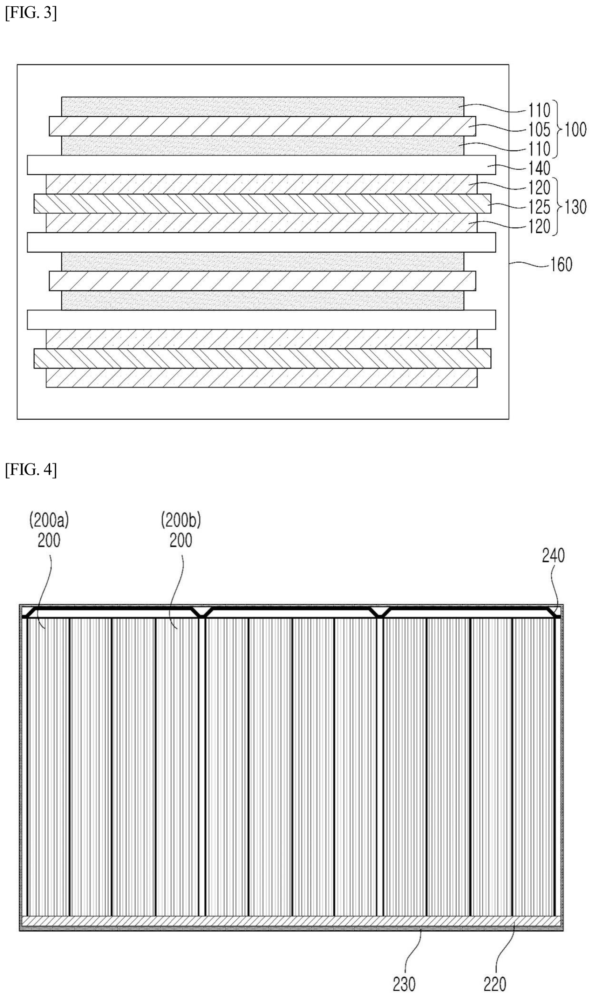

FIGS. 2 and 3 are a schematic plan view and a cross-sectional view, respectively, illustrating a secondary battery according to exemplary embodiments. For example, FIG. 3 is a cross-sectional view taken along line I-I of FIG. 2 in a thickness direction.

The secondary batteries illustrated in FIGS. 2 and 3 are schematically illustrated for convenience of explanation, and the structure of the secondary batteries of the present disclosure is not limited to the structures illustrated in FIGS. 2 and 3.

Referring to FIGS. 2 and 3, a secondary battery may include a cathode 100 and an anode 130 described above, and may include the separator 140 according to the embodiments of the present disclosure described above interposed between the cathode 100 and the anode 130. In FIG. 3, the separator 140 is shown as a single layer for convenience of illustration, but as described with reference to FIG. 1, the separator 140 may include the substrate 142 and the coating layer 145, and may have a single-sided coating structure or a double-sided coating structure.

The cathode 100 may include a cathode active material layer 110 formed by applying a cathode active material onto a cathode current collector 105. The cathode active material may include a compound capable of reversibly intercalating and deintercalating lithium ions. In this case, the secondary battery may be provided as a lithium secondary battery.

The cathode current collector 105 may include stainless steel, nickel, aluminum, titanium, or an alloy thereof. The cathode current collector 105 may include aluminum or stainless steel whose surface is treated with carbon, nickel, titanium, or silver.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

$$[Formula\ 1] \qquad Li_xNi_aM_bO_{2+z}$$

In Formula 1, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In an embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

$$[\text{Formula 1-1}] \qquad Li_xNi_aM1_{b1}M2_{b2}O_{2+z}$$

In Formula 1-1, M1 may include Co, Mn and/or Al. M2 may include the above-described auxiliary elements. In Formula 1-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may serve as a propagation metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle-life stability of the cathode or the secondary battery may be relatively reduced, and side reactions with an electrolyte may also increase. However, according to exemplary embodiments, while maintaining electrical conductivity by including Co, cycle-life stability and capacity retention properties may be improved through Mn.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

$$[\text{Formula 2}] \qquad p[Li_2MnO_3] \cdot (1-p)[Li_qJO_2]$$

In Formula 2, p and q may satisfy $0 < p < 1$, and $0.9 \leq q \leq 1.2$, and J may include at least one element selected from Mn, Ni, Co, Fe, Cr, V, Cu, Zn, Ti, Al, Mg and B.

For example, a cathode slurry may be prepared by mixing the cathode active material in a solvent. The cathode slurry may be coated on the cathode current collector 105, followed by drying and roll-pressing to prepare the cathode active material layer 110.

The cathode active material layer 110 may include a binder and optionally may further include a conductive material, a thickener, etc.

The cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, for example, the cathode binder may be used together with a thickener such as carboxymethyl cellulose (CMC). In an embodiment, a PVDF-based binder may be used as the cathode binder.

For example, the conductive material may include carbon-based conductive materials such as graphite, carbon black, graphene, and carbon nanotubes; metal-based conductive materials such as tin, tin oxide, and titanium oxide; or perovskite materials such as $LaSrCoO_3$, and $LaSrMnO_3$.

The anode 130 may include an anode current collector 125 and an anode active material layer 120.

The anode current collector 125 may include the metal or alloy mentioned for the cathode current collector. In some embodiments, the anode current collector 125 may include copper or a copper alloy.

The anode active material layer 120 may be formed on an upper surface and/or a lower surface of the anode current collector 125. The anode active material layer 120 may be formed on the upper and lower surfaces, respectively.

The anode active material layer 120 may include an anode active material and an anode binder.

The anode active material may include a carbon-based material such as crystalline carbon, amorphous carbon, a carbon composite, or carbon fiber, etc.; a lithium alloy; a silicon (Si)-based compound; tin, or the like.

Examples of the amorphous carbon may include hard carbon, coke, mesocarbon microbeads (MCMB), mesophase pitch-based carbon fibers (MPCF), or the like.

Examples of the crystalline carbon may include graphite-based carbon such as natural graphite, artificial graphite, graphitized coke, graphitized MCMB, graphitized MPCF or the like.

Elements contained in the lithium alloy may include aluminum, zinc, bismuth, cadmium, antimony, silicon, lead, tin, gallium or indium or the like.

The silicon compound may include, for example, silicon, silicon oxide (e.g., $SiO_x$, $0<x<2$), or a silicon-carbon composite compound containing silicon carbide (SiC).

For example, an anode slurry may be prepared by mixing the anode active material with the binder, conductive material, thickener, and the like in a solvent, followed by stirring. The anode slurry may be applied to at least one surface of the anode current collector 125, followed by drying and roll-pressing to prepare the anode 130.

As the binder and the conductive material, materials which are substantially the same as or similar to the above-described materials used in the cathode active material layer 110 may be used. In some embodiments, a binder for forming an anode may include, for example, an aqueous binder such as styrene-butadiene rubber (SBR) to ensure compatibility with the carbon-based active material, and may be used together with a thickener such as carboxymethyl cellulose (CMC).

According to exemplary embodiments, an electrode assembly 150 may be defined by the cathode 100, the anode 130, and the separator 140. The electrode assembly 150 may be a winding type, a stacking type, a z-folding type, or a stacked-folding type.

The electrode assembly 150 may be accommodated in a case 160 together with an electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, 1,2-dimethoxyethane, 1,2-diethoxyethane, vinylene carbonate, sulfolane, $\gamma$-butyrolactone, propylene sulfite, tetrahydrofuran, or the like may be used. These may be used alone or in combination of two or more thereof.

As shown in FIGS. 2 and 3, electrode tabs (a cathode tab and an anode tab) may respectively protrude from the cathode current collector 105 and the anode current collector 125 belonging to each electrode cell and may extend to one end of the case 160. The electrode tabs may be welded together with the one end of the case 160 and may be connected to electrode leads (a cathode lead 107 and an anode lead 127) that extend or are exposed to an outside of the case 160.

Although FIG. 2 shows that the cathode lead 107 and the anode lead 127 protrude from an upper side of the case 160 in a planar direction, positions of the electrode leads are not limited thereto. For example, the electrode leads may protrude from at least one of both sides of the case 160, or may protrude from a lower side of the case 160. Alternatively, the cathode lead 107 and the anode lead 127 may be formed so as to protrude from different sides of the case 160, respectively.

The lithium secondary battery may be manufactured, for example, in a cylindrical, prismatic, pouch, or coin type using a can.

The above-described secondary battery may include the separator 140 according to embodiments of the present disclosure. For example, by using the separator 140 having a single-sided coating structure, the number of stacked layers of the cathode 100 and the anode 130 may be relatively increased.

As shown in FIG. 3, the electrode assembly 150 including the cathode 100, the anode 130, and the separator 140 may be defined. The separator 140 may be interposed between the cathode 100 and the anode 130. For example, the secondary battery may include a plurality of electrode assemblies.

Accordingly, the degree of change in the self-temperature of the electrode assembly 150 may be reduced. For example, when an internal temperature increases due to a short circuit within the electrode assembly 150, the self-temperature of the electrode assembly 150 may increase. For example, when an increasing rate of the self-temperature decreases, or when a temperature corresponding to a rate of change of the self-temperature at a specific point is high, a variation level of the self-heating temperature may be considered low.

According to exemplary embodiments, after a self-heating point of the electrode assembly 150 reaches 0.02 °C/min or higher, a temperature at a point where a self-temperature change rate of the electrode assembly 150 reaches 1 °C/sec may be 175 °C or higher.

In some embodiments, the temperature at the point where the self-temperature change rate of the battery reaches 1 °C/sec may be 175 °C or higher, 175.3 °C or higher, 175.5 °C or higher, 176 °C or higher, 176.5 °C or higher, 177 °C or higher, 177.5 °C or higher, or 178 °C or higher. Within this range, thermal runaway of the secondary battery may be suppressed.

For example, self-heating may occur due to decomposition of an active material and an electrolyte within the electrode assembly 150, caused by external impacts or the like. The decomposition of the active material and the electrolyte may increase the temperature within the electrode assembly 150, thereby promoting the decomposition and accelerating a temperature change within the electrode assembly 150. As the temperature change within the electrode assembly 150 accelerates, the self-temperature change rate of the electrode assembly 150 may increase to 1 °C/sec or higher. Due to a delay in heat transfer within the electrode assembly 150 and/or suppression of internal heat generation, the temperature at a point where the self-temperature change rate of the electrode assembly 150 reaches 1 °C/sec may be high.

The temperature at the point where the self-temperature change rate of the electrode assembly reaches 1 °C/sec may vary depending on a type of active material, sizes of the cathode and the anode, a size of the separator, or the like. For example, the above-described temperature may represent a temperature of an electrode assembly including a separator having a size of 50 mm $\times$ 50 mm.

FIG. 4 is a schematic cross-sectional view illustrating a secondary battery module according to exemplary embodiments.

Referring to FIG. 4, the secondary battery module may include a plurality of secondary batteries 200. The secondary battery module may include a cooling plate 220 arranged on a lower side parallel to a direction in which the plurality of secondary batteries 200 are stacked on one another. The plurality of secondary batteries 200 may be accommodated in a cover portion 230.

According to exemplary embodiments, the cover portion 230 may include a lower cover portion adjacent to the cooling plate 220, an upper cover portion disposed on an opposite side of the cooling plate 220, and side cover portions disposed between the lower cover portion and the upper cover portion.

For example, the side cover portions may include a front cover portion and a rear cover portion. For example, the side cover portions may surround six outer surfaces of the plurality of stacked secondary batteries 200. For example, the lower cover portion, the upper cover portion, and the side cover portions may be formed integrally with each other.

According to exemplary embodiments, the plurality of secondary batteries 200 may be stacked on one another to be in direct contact with each other. According to exemplary embodiments, the plurality of secondary batteries 200 may be stacked such that one side of each of the plurality of secondary batteries 200 is in contact with the cooling plate 220.

According to exemplary embodiments, the secondary battery module may include a surface pressure pad 240 disposed on an upper side parallel to the direction in which the plurality of secondary batteries 200 are stacked. For example, the surface pressure pad 240 may be formed of an insulating material having an elastic restoring force. For example, the surface pressure pad 240 may provide stacking structural stability of the secondary batteries. For example, a thermally conductive member may be filled in a space formed between the surface pressure pad 240 and the plurality of secondary batteries 200.

According to exemplary embodiments, the surface pressure pad 240 may be omitted. For example, the plurality of secondary batteries 200 may be in direct contact with the cover portion 230 from an upper side.

According to exemplary embodiments, the ignition propagation of the secondary batteries 200 may be suppressed.

According to exemplary embodiments, one or more secondary batteries may be included between a first secondary battery 200a and a second secondary battery 200b. For example, the first secondary battery 200a and the second secondary battery 200b may represent two secondary batteries spaced apart from each other by a predetermined distance without being in contact with each other.

In some embodiments, two secondary batteries may be included between the first secondary battery 200a and the second secondary battery 200b.

According to exemplary embodiments, the ignition propagation time from ignition of the first secondary battery 200a to ignition of the second secondary battery 200b may be 70 seconds or longer. In some embodiments, the ignition propagation time may be 70 seconds or longer, 71 seconds or longer, 72 seconds or longer, 73 seconds or longer, 74 seconds or longer, or 75 seconds or longer.

The ignition propagation time may vary depending on a size of the secondary battery, stacked structure, a type of the cooling plate, a type of the active material, or the like. For example, the ignition propagation time may represent the ignition propagation time between secondary batteries including a separator having a size of 50 mm × 50 mm.

The term "ignition" may refer to a time point at which fire initially occurs. For example, ignition may be considered to occur when fire is observed from an exterior of the electrode assembly 150.

For example, the ignition propagation time may refer to a time measured in a state in which two secondary batteries are included between the first secondary battery 200a and the second secondary battery 200b.

The invention is also defined by the following aspects:

Aspect 1. A separator 140 for a secondary battery comprising:

a substrate 142; and
a coating layer 145 on a surface of the substrate 142, the coating layer 145 comprising inorganic particles,
wherein a substrate orientation degree of the separator 140, as defined by Equation 1 below, is 90 gf/g·m$^2$ or higher:

$$[\text{Equation 1}]$$

$$\text{Substrate orientation degree} = S \,/\, W$$

wherein in Equation 1, S is a puncture strength of the separator 140, and W is a weight per unit area of the substrate 142.

Aspect 2. The separator 140 for a secondary battery according to aspect 1, wherein the substrate orientation degree is 90 gf/g·m$^2$ to 120 gf/g·m$^2$.

Aspect 3. The separator 140 for a secondary battery according to aspect 1 or 2, wherein the content of the inorganic particles is 40 wt% or more, based on a total weight of the coating layer 145.

Aspect 4. The separator 140 for a secondary battery according to any one of aspects 1 to 3, wherein the inorganic particles comprise at least one of aluminum hydroxide, magnesium hydroxide, aluminum oxide, magnesium oxide, calcium oxide, barium sulfate, boehmite, titanium dioxide, silica, and clay.

Aspect 5. The separator 140 for a secondary battery according to any one of aspects 1 to 4, wherein the weight per unit area of the substrate 142 is 4.0 g/m$^2$ to 5.0 g/m$^2$.

Aspect 6. The separator 140 for a secondary battery according to any one of aspects 1 to 5, wherein a machine direction (MD) thermal shrinkage ratio, measured after storage at 130 °C for 1 hour, is less than 3.0%.

Aspect 7. The separator 140 for a secondary battery according to any one of aspects 1 to 6, wherein a transverse direction (TD) thermal shrinkage ratio, measured after storage at 130 °C for 1 hour, is less than 2.0%.

Aspect 8. The separator 140 for a secondary battery according to any one of aspects 1 to 7, wherein at least one of a MD stretch ratio and a TD stretch ratio of the substrate is 3 times to 8 times.

Aspect 9. The separator 140 for a secondary battery according to any one of aspects 1 to 8, wherein the substrate 142 has a thickness of 1 μm to 15 μm.

Aspect 10. The separator 140 for a secondary battery according to any one of aspects 1 to 9, wherein the coating layer 145 further comprises polyethylene-based organic particles.

Aspect 11. The separator 140 for a secondary battery according to any one of aspects 1 to 10, wherein the coating layer 145 further comprises a binder, wherein the binder comprises at least one of polymethyl methacrylate, polybutylacrylate, polyacrylonitrile, polyvinylpyrrolidone, polyvinylacetate, polyethylene oxide, ethylene vinyl acetate, and a copolymer thereof.

Aspect 12. A secondary battery 200, 200a, 200b comprising an electrode assembly 150, the electrode assembly 150 comprising a cathode 100, an anode 130, and the separator 140 for a secondary battery according to any one of aspects 1 to 11 interposed between the cathode 100 and the anode 130.

Aspect 13. The secondary battery 200, 200a, 200b according to aspect 12, wherein after a self-heating point of the electrode assembly 150 reaches 0.02 °C/min or higher, a temperature at a point where a self-temperature change rate of the electrode assembly 150 reaches 1 °C/sec is 175 °C or higher.

Aspect 14. A secondary battery module comprising a structure in which a plurality of secondary batteries 200 according to aspect 12 or 13 are stacked on one another.

Aspect 15. The secondary battery module according to aspect 14, wherein the plurality of secondary batteries 200 comprises a first secondary battery 200a and a second secondary battery 200b that is not in contact with the first secondary battery 200a,

wherein an ignition propagation time from ignition of the first secondary battery 200a to ignition of the second secondary battery 200b is 70 seconds or more.

**Examples and Comparative Examples**

**(1) Preparation of Separators**

Separators were prepared having a content of inorganic particles, a puncture strength, and a weight per unit area of the substrate as shown in Table 1.

Specifically, a mixture was prepared by mixing pellets prepared using a high-density polyethylene (HDPE) resin with oil in a volume ratio of 3:7. The mixture was extruded into a sheet at 200 °C using a T-die extruder and then solidified through a cooling roll to produce an unstretched sheet. The unstretched sheet was stretched in the TD and MD (each with a stretch ratio of 5 times or more) at 120 °C and then heat-set at 130 °C to prepare a substrate.

Boehmite and a polymethyl methacrylate binder were added to water and mixed to prepare a slurry. The slurry was coated on the substrate and dried to form a coating layer. Separators were prepared by varying a thickness of the coating layer and an inorganic particles-to-binder ratio of the coating layer according to Table 1 below.

**(2) Analysis of Separator properties**

**Analysis of Substrate Orientation Degree**

The substrate orientation degree was measured according to Equation 1. The puncture strength(S) in Equation 1 was measured using a UTM (Instron 3345). Specifically, the separator was secured with a fixture, and a puncture pin was positioned to be in perpendicular contact with the separator. The force was increased at a constant rate until the puncture pin penetrated the separator, and the maximum load applied just before penetration was defined as the puncture strength(S).

$$[\text{Equation 1}]$$

$$\text{Substrate orientation degree} = S \,/\, W$$

In Equation 1, S is the puncture strength of the separator, and W is the weight per unit area of the substrate.

**Analysis of Content of Inorganic Particles**

The content of inorganic particles of the separator was analyzed using thermogravimetric analysis (TGA). Specifically, measurements were taken using a thermogravimetric analyzer (model: TGA 5500) at a temperature increase rate of 10 °C/min from room temperature to 900 °C under a nitrogen atmosphere. Measurements were taken under an air atmosphere at temperatures of 700 °C or higher.

**Analysis of Thermal Shrinkage Ratio**

A 50 mm × 50 mm separator, marked in the longitudinal (MD) and transverse (TD) directions, was placed in a temperature-stabilized oven (a convection oven) at 130 °C for 1 hour. After storage, the change in length of the separator was measured, and the thermal shrinkage ratio was calculated according to Equation 2 below.

$$[\text{Equation 2}]$$

$$\text{MD thermal shrinkage ratio (\%)} = \{(\text{Initial length - Length after storage}) \,/\, \text{Initial length}\} \times 100$$

$$\text{TD thermal shrinkage ratio (\%)} = \{(\text{Initial width - Width after storage}) \,/\, \text{Initial width}\} \times 100$$

[TABLE 1]

| Classification | Puncture strength (S) (gf) | Weight per unit area of substrate (W) (g/m$^2$) | Substrate orientation degree (gf/g·m$^2$) | Content of inorganic particles (wt%) | MD thermal shrinkage ratio (%) | TD thermal shrinkage ratio (%) |
|---|---|---|---|---|---|---|
| Example 1 | 440 | 4.7 | 94 | 42 | 1.0 | 1.0 |
| Example 2 | 400 | 4.4 | 91 | 43.4 | 1.25 | 0.75 |
| Example 3 | 387 | 4.3 | 90 | 43.2 | 1.0 | 0.5 |
| Example 4 | 467 | 4.4 | 106 | 41.5 | 1.5 | 0.5 |
| Example 5 | 385 | 4.2 | 91 | 34.4 | 3.75 | 1.5 |
| Example 6 | 465 | 4.0 | 116 | 43.4 | 2.0 | 1.5 |
| Comparative Example 1 | 369 | 4.3 | 86 | 39.7 | 3.0 | 2.0 |
| Comparative Example 2 | 436 | 4.9 | 89 | 41.0 | 3.75 | 2.0 |

**Experimental Example**

**Manufacture of Secondary Battery**

A cathode slurry was prepared by adding 94 wt% of lithium-nickel-cobalt-manganese oxide (Li-Ni$_{0.88}$Co$_{0.06}$Mn$_{0.06}$) as a cathode active material, 2.5 wt% of polyvinylidene fluoride (PVDF) as a binder, and 3.5 wt% of Super-P as a conductive material to N-methylpyrrolidone (NMP), based on the total weight of the cathode slurry. The cathode slurry was uniformly applied to an aluminum substrate having a thickness of 12 $\mu$m, followed by drying and roll-pressing to prepare a cathode.

An anode slurry was prepared by adding 95 wt% of graphite-based active material (artificial graphite:natural graphite = 70:25 weight ratio) as an anode active material and 5 wt% of styrene-butadiene rubber (SBR)-carboxymethyl cellulose (CMC) as a binder to water. The anode slurry was uniformly applied to a copper substrate having a thickness of 8 $\mu$m, followed by drying and roll-pressing to prepare an anode.

The cathode and anode were respectively notched to a predetermined size and stacked with the separators of the examples and comparative examples interposed therebetween to prepare an electrode assembly.

The electrode assembly was placed in a pouch and sealed on three sides, leaving one side open for electrolyte injection ("electrolyte injection side"). At this time, a portion with electrode tabs was included in the sealed part. After injecting an electrolyte through the electrolyte injection side, the remaining electrolyte injection side was also sealed, and the assembly was then impregnated for 12 hours or more to manufacture a 2000 mAh lithium secondary battery.

A 1M LiPF$_6$ solution using a mixed solvent of EC/EMC/DMC (25/45/30 by volume) was used as an electrolyte.

(1) Evaluation of Accelerated Rate Calorimetry (ARC)

The manufactured secondary battery was placed in a chamber with a temperature sensor attached thereto. The temperature was raised to 50 °C and then increased at a rate of 5 °C/min. The temperature increase rate of the secondary battery was monitored at 30-minute intervals. When the temperature increase rate of the secondary battery reached 0.02 °C/min or higher, the chamber heating was stopped, and the temperature at a point where the self-temperature change rate of the secondary battery reaches 1 °C/sec was measured.

If the measured temperature was 175 °C or higher, it was evaluated as "○"; and if it was lower than 175 °C, it was evaluated as "X."

(2) Evaluation of Ignition Delay Time

A plurality of the manufactured secondary batteries were stacked on a heating pad disposed on a lower jig, and an upper jig was stacked thereon. After raising a temperature of the heating pad, a time for ignition propagation from a first secondary battery, which was disposed in contact with the heating pad, to a fourth secondary battery from the heating pad was measured, starting from an initial ignition time point of the first secondary battery.

Ignition delay times of 70 seconds or higher were evaluated as "○"; and those lower than 70 seconds were evaluated as "X."

The evaluation results are shown in Table 2 below.

[TABLE 2]

| Classification | Temperature at 1 °C/sec point in ARC test | Ignition delay time evaluation |
|---|---|---|
| Example 1 | ○ (178 °C) | ○ (87s) |
| Example 2 | ○ (178.21 °C) | ○ (81s) |
| Example 3 | ○ (175.3 °C) | ○ (75s) |
| Example 4 | ○ (178 °C) | ○ (89s) |
| Example 5 | X (173.77 °C) | X (65s) |
| Example 6 | X (171.30 °C) | ○ (71s) |
| Comparative Example 1 | X (171 °C) | X (62s) |
| Comparative Example 2 | X (164 °C) | X (55s) |

Referring to Table 2, in the secondary batteries using the separators according to the examples, overall, self-heating temperature as evaluated by ARC was relatively high, or an ignition delay time was relatively long.

In the secondary batteries using the separators according to the comparative examples with a low substrate orientation degree, the self-heating temperature as evaluated by ARC was relatively low, and the ignition delay time was reduced.

In Example 5, which had a relatively low substrate orientation degree and a relatively low puncture strength and/or content of inorganic particles, the self-heating temperature and the ignition delay time were relatively low.

In Example 6, which had a relatively high substrate orientation degree, the self-heating temperature was relatively low.

**Claims**

1. A separator 140 for a secondary battery comprising:

   a substrate 142; and
   a coating layer 145 on a surface of the substrate 142, the coating layer 145 comprising inorganic particles, wherein a substrate orientation degree of the separator 140, as defined by Equation 1 below, is 90 gf/g·m$^2$ or higher:

   [Equation 1]

   $$\text{Substrate orientation degree} = S / W$$

   wherein in Equation 1, S is a puncture strength of the separator 140, and W is a weight per unit area of the substrate 142.

2. The separator 140 for a secondary battery according to claim 1, wherein the substrate orientation degree is 90 gf/g·m$^2$ to 120 gf/g·m$^2$.

3. The separator 140 for a secondary battery according to claim 1 or 2, wherein the content of the inorganic particles is 40 wt% or more, based on a total weight of the coating layer 145.

4. The separator 140 for a secondary battery according to any one of claims 1 to 3, wherein the inorganic particles comprise at least one of aluminum hydroxide, magnesium hydroxide, aluminum oxide, magnesium oxide, calcium oxide, barium sulfate, boehmite, titanium dioxide, silica, and clay.

5. The separator 140 for a secondary battery according to any one of claims 1 to 4, wherein the weight per unit area of the substrate 142 is 4.0 g/m$^2$ to 5.0 g/m$^2$.

6. The separator 140 for a secondary battery according to any one of claims 1 to 5, wherein a machine direction (MD) thermal shrinkage ratio, measured after storage at 130 °C for 1 hour, is less than 3.0%.

7.  The separator 140 for a secondary battery according to any one of claims 1 to 6, wherein a transverse direction (TD) thermal shrinkage ratio, measured after storage at 130 °C for 1 hour, is less than 2.0%.

8.  The separator 140 for a secondary battery according to any one of claims 1 to 7, wherein at least one of a MD stretch ratio and a TD stretch ratio of the substrate is 3 times to 8 times.

9.  The separator 140 for a secondary battery according to any one of claims 1 to 8, wherein the substrate 142 has a thickness of 1 μm to 15 μm.

10. The separator 140 for a secondary battery according to any one of claims 1 to 9, wherein the coating layer 145 further comprises polyethylene-based organic particles.

11. The separator 140 for a secondary battery according to any one of claims 1 to 10, wherein the coating layer 145 further comprises a binder, wherein the binder comprises at least one of polymethyl methacrylate, polybutylacrylate, polyacrylonitrile, polyvinylpyrrolidone, polyvinylacetate, polyethylene oxide, ethylene vinyl acetate, and a copolymer thereof.

12. A secondary battery 200, 200a, 200b comprising an electrode assembly 150, the electrode assembly 150 comprising a cathode 100, an anode 130, and the separator 140 for a secondary battery according to any one of claims 1 to 11 interposed between the cathode 100 and the anode 130.

13. The secondary battery 200, 200a, 200b according to claim 12, wherein after a self-heating point of the electrode assembly 150 reaches 0.02 °C/min or higher, a temperature at a point where a self-temperature change rate of the electrode assembly 150 reaches 1 °C/sec is 175 °C or higher.

14. A secondary battery module comprising a structure in which a plurality of secondary batteries 200 according to claim 12 or 13 are stacked on one another.

15. The secondary battery module according to claim 14, wherein the plurality of secondary batteries 200 comprises a first secondary battery 200a and a second secondary battery 200b that is not in contact with the first secondary battery 200a,
wherein an ignition propagation time from ignition of the first secondary battery 200a to ignition of the second secondary battery 200b is 70 seconds or more.

[FIG. 1]

<u>140</u>

TD
⊗ ⟶ MD

[FIG. 2]

[FIG. 3]

[FIG. 4]

Europäisches
Patentamt

European
Patent Office

Office européen
des brevets

## EUROPEAN SEARCH REPORT

Application Number

EP 26 15 3326

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/388808 A1 (CHOI HYEONSUN [KR] ET AL) 10 December 2020 (2020-12-10) * claims; examples * | 1-15 | INV. H01M50/417 H01M50/42 H01M50/431 |
| A | US 2019/157647 A1 (KIDOSAKI TORU [JP] ET AL) 23 May 2019 (2019-05-23) * paragraphs [0017], [0029] - [0031], [0160] - [0167]; claims * * paragraphs [0223] - [0227]; examples 10-12 * | 1-15 | H01M50/443 H01M50/446 H01M50/451 H01M50/489 |
| A | EP 3 902 027 A1 (SAMSUNG SDI CO LTD [KR]) 27 October 2021 (2021-10-27) * paragraphs [0004] - [0005]; claims; examples * | 1-15 | |
| Y | US 2022/200098 A1 (HONDA SUSUMU [JP] ET AL) 23 June 2022 (2022-06-23) * paragraphs [0012] - [0030], [0157]; claims; examples * | 1-9, 12-15 | |
| Y | US 2019/020008 A1 (KIM CHAN-JONG [KR] ET AL) 17 January 2019 (2019-01-17) * paragraphs [0004] - [0005]; claims; examples * | 1-9, 12-15 | **TECHNICAL FIELDS SEARCHED (IPC)** H01M |

The present search report has been drawn up for all claims

| Place of search | Date of completion of the search | Examiner |
|---|---|---|
| Munich | 11 June 2026 | Masson, Patrick |

EPO FORM 1503 03.82 (P04C01)

# EP 4 783 343 A1

## ANNEX TO THE EUROPEAN SEARCH REPORT
## ON EUROPEAN PATENT APPLICATION NO.

EP 26 15 3326

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2026

| Patent document cited in search report | Publication date | Patent family member(s) | Publication date |
|---|---|---|---|
| US 2020388808 A1 | 10-12-2020 | CN 112054150 A | 08-12-2020 |
| | | EP 3748730 A1 | 09-12-2020 |
| | | KR 20200140637 A | 16-12-2020 |
| | | US 2020388808 A1 | 10-12-2020 |
| | | US 2024006717 A1 | 04-01-2024 |
| US 2019157647 A1 | 23-05-2019 | CN 108473706 A | 31-08-2018 |
| | | EP 3415556 A1 | 19-12-2018 |
| | | JP 6288216 B2 | 07-03-2018 |
| | | JP 6696518 B2 | 20-05-2020 |
| | | JP 2017141428 A | 17-08-2017 |
| | | JP 2018104713 A | 05-07-2018 |
| | | KR 20180113517 A | 16-10-2018 |
| | | US 2019157647 A1 | 23-05-2019 |
| EP 3902027 A1 | 27-10-2021 | CN 113169417 A | 23-07-2021 |
| | | EP 3902027 A1 | 27-10-2021 |
| | | KR 20200078011 A | 01-07-2020 |
| | | US 2022037741 A1 | 03-02-2022 |
| | | WO 2020130270 A1 | 25-06-2020 |
| US 2022200098 A1 | 23-06-2022 | CN 113678312 A | 19-11-2021 |
| | | EP 3919269 A1 | 08-12-2021 |
| | | EP 4235891 A2 | 30-08-2023 |
| | | HU E063695 T2 | 28-01-2024 |
| | | JP 6986640 B2 | 22-12-2021 |
| | | JP 2021192385 A | 16-12-2021 |
| | | JP WO2020246497 A1 | 13-09-2021 |
| | | KR 20210136100 A | 16-11-2021 |
| | | US 2022200098 A1 | 23-06-2022 |
| | | WO 2020246497 A1 | 10-12-2020 |
| US 2019020008 A1 | 17-01-2019 | CN 108475753 A | 31-08-2018 |
| | | EP 3392931 A1 | 24-10-2018 |
| | | JP 6698174 B2 | 27-05-2020 |
| | | JP 2019502248 A | 24-01-2019 |
| | | KR 20180023878 A | 07-03-2018 |
| | | PL 3392931 T3 | 21-09-2020 |
| | | US 2019020008 A1 | 17-01-2019 |
| | | WO 2018038584 A1 | 01-03-2018 |

EPO FORM P0459

For more details about this annex : see Official Journal of the European Patent Office, No. 12/82